(19) Europäisches Patentamt
European Patent Office
Office européen des brevets

(11) EP 4 592 334 A1

(12) EUROPEAN PATENT APPLICATION

(43) Date of publication:
30.07.2025 Bulletin 2025/31

(21) Application number: 25150922.0

(22) Date of filing: 09.01.2025

(51) International Patent Classification (IPC):
C08J 3/20 (2006.01)          C08J 3/22 (2006.01)
C08K 3/04 (2006.01)          C08K 7/06 (2006.01)
C08L 69/00 (2006.01)

(52) Cooperative Patent Classification (CPC):
(C-Sets available)
C08J 3/226; C08J 3/203; C08K 3/04; C08K 7/06;
C08L 69/00; C08J 5/042; C08J 2369/00     (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.01.2024 JP 2024007876

(71) Applicant: Ricoh Company, Ltd.
Tokyo 143-8555 (JP)

(72) Inventor: Suzuki, Akira
Takashima, 220-0011 (JP)

(74) Representative: Marks & Clerk LLP
15 Fetter Lane
London EC4A 1BW (GB)

(54) RESIN COMPOSITION CONTAINING CARBON FIBER

(57) A resin composition containing carbon fiber contain a thermoplastic resin and a carbon fiber kneaded in thermoplastic resin, wherein the carbon fiber has an average length of 50 to 150 µm, a proportion of the carbon fiber to the thermoplastic resin is 3 to 9 percent by mass, and the resin composition containing carbon fiber has a flexural strength of at least 4000 Mpa.

# FIG. 5

Processed by Luminess, 75001 PARIS (FR)

(52) Cooperative Patent Classification (CPC): (Cont.)

C-Sets
**C08L 69/00, C08K 3/04**

**Description**

BACKGROUND

Technical Field

The present disclosure is related to a resin composition containing carbon fiber.

Description of the Related Art

There is a technology for cutting carbon fibers from their fibrous state into fine pieces and adding them to thermoplastic resins.

It is already known that by adding a few percent by mass of carbon fibers to thermoplastic resin, the material's strength and specific flexural modulus are significantly improved.

Carbon fibers that are finely cut from their fibrous state possess an aspect ratio. For example, the length of carbon fibers after being cut is in the range of 200 $\mu$m (0.2 mm) to 3 mm.

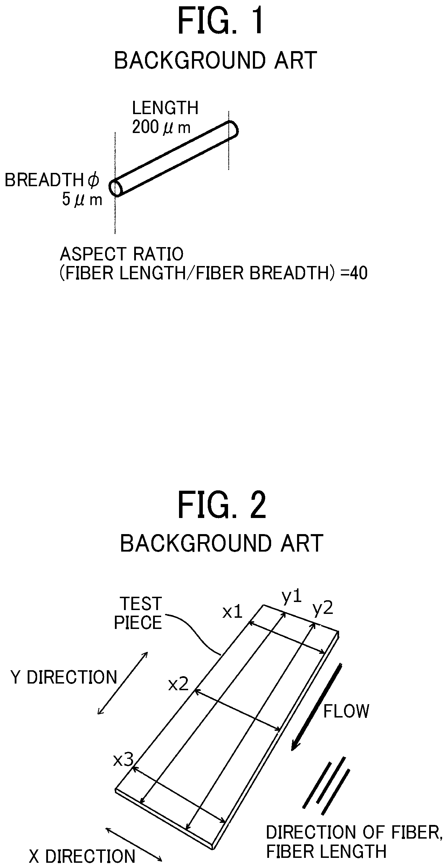

In the case illustrated in FIG. 1, where the length (fiber direction) is 200 $\mu$m and the breadth (diameter) is 5 $\mu$m, the aspect ratio (length/diameter) is 40. If carbon fibers with this aspect ratio are added to a thermoplastic resin, and the resulting resin composition obtained is heat-melted and molded, the carbon fibers tend to align along the flow direction of the material.

In this case, after the resin composition cures, the molding shrinkage rate of the molded product differs between the flow direction and the direction perpendicular to the flow. This discrepancy in the molding shrinkage rate poses a problem.

The issue of differing molding shrinkage rates in the molded product is explained with reference to FIG. 2.

FIG 2 is a diagram illustrating a flat molded product formed using a molten resin composition.

If a heat-molten material is introduced from the top right in FIG. 2 and cooled to form a product, the carbon fibers tend to align along the material's flow direction (broad arrow along in FIG.2, with three lines indicating the alignment of the carbon fibers. This leads to a difference in the molding shrinkage rate of the molded product between the resin flow direction Y and the direction perpendicular to the resin flow X.

In this example, if carbon fibers are added, the molding shrinkage rate in the resin flow direction Y tends to be smaller than it is without carbon fibers. This is because the Y direction, where the fibers are aligned, resists shrinkage, leading to a lower shrinkage rate. In contrast, in the X direction, where the fibers are not aligned, the molded product is more prone to shrinkage than in the Y direction, resulting in a higher shrinkage rate compared to the Y direction.

This phenomenon is referred to as anisotropy in molding shrinkage rates. If anisotropy is significant, it can cause dimensional inaccuracies in the molded product, presenting a problem.

In an attempt to improve anisotropy, a resin molding material has been proposed in Unexamined Japanese Patent Application Publication No. 2000-119405. This material includes carbon fibers A and thermoplastic resin B as essential components. The carbon fibers A contains two types: carbon fibers a1 with a Young's modulus of at most 150 GPa and a diameter in the range of 10 $\mu$m to 20 $\mu$m, and carbon fibers a2 with a diameter in the range of 0.1 $\mu$m to 5 $\mu$m. These two types of carbon fibers are contained at a combined mass of at least 95 mass percent of the total mass of the carbon fibers A.

The material described in Unexamined Japanese Patent Application Publication No. 2000-119405 mentioned above uses two types of carbon fibers with different diameters. This approach requires the preparation of two types of carbon fibers, which presents a problem.

SUMMARY

According to the present disclosure, a resin composition containing carbon fiber (carbon fiber-containing resin composition) is provided which provides molded resin products with low anisotropy, excellent dimensional stability, and high flexural strength.

According to embodiments of the present disclosure, a resin composition containing carbon fiber is provided which contains a thermoplastic resin and a carbon fiber kneaded in thermoplastic resin, wherein the carbon fiber has an average length of 50 to 150 $\mu$m, a proportion of the carbon fiber to the thermoplastic resin is 3 to 9 percent by mass, and the resin composition containing carbon fiber has a flexural strength of at least 4000 Mpa.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a diagram illustrating the aspect ratio of carbon fibers;
FIG. 2 is a diagram explaining the molding shrinkage rate of molded products;
FIG. 3 is a diagram illustrating the relationship between the amount of carbon fiber added and the flexural modulus for the resin composition of Examples described later;
FIG. 4 is another diagram illustrating the relationship between the amount of carbon fiber added and the flexural modulus for the resin composition of Examples described later; and
FIG. 5 is a diagram illustrating the comparison between the amount of carbon fiber added and the flexural modulus for the resin composition of each Example described later.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Embodiments of the present invention are described in detail below with reference to accompanying drawings. In describing embodiments illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

The resin composition containing carbon fiber (carbon fiber-containing resin composition) of the present disclosure can address issues with molding shrinkage rates while maintaining strength properties such as flexural modulus by adjusting the length and content of the carbon fibers added to the thermoplastic resin. In particular, by improving the issues of anisotropy in molding shrinkage rates caused by the alignment of carbon fibers along the flow of the resin during the molding process of the carbon fiber-containing resin composition, it becomes possible to produce molded products with excellent dimensional stability.

The resin composition containing carbon fiber of the present disclosure is described in detail below.

Resin Composition Containing Carbon Fiber

The resin composition used to form a molded resin product contains thermoplastic resin (e.g., PC/ABS) and carbon fibers as components.

The resin composition may optionally include flame retardants, antioxidants, and other additives.

Thermoplastic Resin

The thermoplastic resin includes the following.

PC Resin

Polycarbonate resin (PC resin) may be an aromatic homopolycarbonate resin or copolymer carbonate resin obtained, for example, by reacting an aromatic divalent phenol compound with phosgene or a carbonate diester.

Specific examples of aromatic divalent phenol compounds include, but are not limited to, 2,2-bis(4-hydroxyphenyl)propane, 2,2-bis(4-hydroxy-3,5-dimethylphenyl)propane, bis(4-hydroxyphenyl)methane, 1,1-bis(4-hydroxyphenyl)ethane, 2,2-bis(4-hydroxyphenyl)butane, 2,2-bis(4-hydroxy-3,5-diphenyl)butane, 2,2-bis(4-hydroxy-3,5-diethylphenyl)propane, 2,2-bis(4-hydroxy-3,5-dipropylphenyl)propane, 1,1-bis(4-hydroxyphenyl)cyclohexane, and 1-phenyl-1,1-bis(4-hydroxyphenyl)ethane, among others. These may be used alone or in combination.

ABS Resin

The method of producing ABS resin (acrylonitrile-butadiene-styrene copolymer resin) is not particularly limited.
Specific examples include, but are not limited to, the following: an emulsion polymerization method in which rubber in an emulsified state is mixed with emulsified styrene and acrylonitrile monomers for polymerization; and a bulk-suspension polymerization method, where rubber is dissolved in styrene and acrylonitrile monomers for bulk polymerization, and the partially polymerized mixture is suspended in water to continue polymerization under suspension polymerization conditions. In the case of alloying PC resin, PVC resin, PBT resin, or similar materials, the polymerization method is selected based on the properties of the ABS resin used. In general, alloying is possible with ABS resins produced by either the emulsion polymerization method or the bulk-suspension polymerization method.

PC/ABS Resin

PC/ABS resin is a resin mixture PC resin (polycarbonate resin) and ABS resin (acrylonitrile-butadiene-styrene copolymer resin).
Alternatively, a block copolymer of PC resin and ABS resin may be used in place of the PC/ABS resin.

Recycled Material

The resin mentioned above may include recycled materials (recovered materials).
Recycled materials can include, for example, plastics recovered from products such as printers. They may also include materials recovered from the market, such as recycled materials from home appliances like air conditioners, televisions, refrigerators, washing machines, and used office automation (OA) equipment.

Carbon Fiber

Carbon fiber can be procured.
Hereafter, "carbon fiber" may also be referred to as "CF" or "carbon fiber."
For CF, virgin materials (new materials) can be used, as well as recycled materials.
Generally, virgin materials exhibit less variation in quality. However, recent advancements in CF recycling technology have significantly reduced quality variation in recycled materials. As a result, using recycled materials does not pose a problem. Additionally, recycled materials are more advantageous than virgin materials in terms of environmental impact and cost.
Various types and shapes of CF are commercially available. These CFs are kneaded with thermoplastic resin, and the kneaded mixture is injection-molded to form molded products. These molded products are used for parts in products such as printers. Since the quality requirements vary depending on the part, the type and shape of CF are selected appropriately based on the required specifications.
In Example 1 described later, commonly available CF materials with a fiber length of approximately 3 mm and a fiber diameter of 1 to 10 $\mu$m are used, obtained from Carbon Fiber Recycle Industry co., ltd. CFs of sizes other than those mentioned above can also be procured.
CFs were adjusted to a length of approximately 3 mm by finely cutting them from their fibrous state.
If the length exceeds approximately 3 mm, kneading with thermoplastic resin becomes difficult due to fiber entanglement and aggregation.
On the other hand, if the length is shorter than approximately 3 mm, cutting becomes challenging, resulting in higher costs.
Carbon fibers in the form of milled fiber may be used as the CF. Milled fiber CF is a material with short fiber states, appearing in a powdered form.
In Example 2 described later, a material with a fiber length of approximately 25 $\mu$m and a fiber diameter of 1 to 10 $\mu$m is used as the milled fiber CF. Fibers with a length of around 25 $\mu$m appear in powdered form.
The above-mentioned milled fiber CF is generally available from Sobueclay kabushiki kaisha.

Melt-kneading

A preferred method of uniformly mixing the components constituting the resin composition is melt-kneading.
In this kneading process, the above-mentioned components are kneaded using kneading machines known in the technical field, such as tumblers, Henschel mixers, Banbury mixers, rolls, Brabender mixers, single-screw kneading extruders, twin-screw kneading extruders, and kneaders, while conditions such as kneading speed, kneading temperature, and kneading time are appropriately adjusted.

For kneading, for example, the above-mentioned components can be preliminarily mixed with equipment such as tumblers or Henschel mixers and then melt-kneaded with kneading machines such as Banbury mixers, rolls, Brabender mixers, single-screw kneading extruders, twin-screw kneading extruders, or kneaders. Alternatively, the components can be fed directly into an extruder from feeders without prior mixing and subjected to melt kneading. Furthermore, a resin composition obtained by preliminarily mixing only some components and subsequently melt kneading may be used as a master batch. This master batch can then be melt kneaded again with the remaining components.

The kneading temperature is determined based on the melting temperature Tm of the thermoplastic resin.

As the measured value of Tm, any value measured using devices such as DSC, TMA, DTA, or temperature-variable viscoelastic measurement devices, similar to glass transition point Tg measurements, can be used. The resin composition of the present disclosure can be readily obtained by kneading around the Tm temperature measured with these devices.

An example of kneading conditions involves using a twin-screw kneading extruder to mix raw materials at a specified composition ratio (parts by mass). A twin-screw melt kneading extruder (available from TECHNOVEL CORPORATION) with a screw diameter of 25 mm and a screw effective length L/D = 26 is used as the kneading machine, and the cylinder temperature is set to 230 degrees Celsius to 240 degrees Celsius to obtain the resin composition.

The length of the carbon fiber (CF) can be adjusted by changing the screw rotation speed (rpm) under the above-mentioned kneading conditions.

As a reference screw rotation speed (rpm), in this example, it is set to 250 rpm to 300 rpm.

To shorten the length of the carbon fiber, the screw rotation speed (rpm) can be reduced to approximately 50 rpm to 100 rpm, and the range can be adjusted to 150 rpm to 250 rpm.

In the subsequent Examples, the resin composition containing carbon fibers obtained through the above process was melted and injection-molded at a set temperature of 240 degrees Celsius to 260 degrees Celsius to produce evaluation pieces (test samples).

The terms of image forming, recording, and printing in the present disclosure represent the same meaning.

Also, recording media, media, and print substrates in the present disclosure have the same meaning unless otherwise specified.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Hereinafter, the present disclosure is described in more detail based on Examples, but the technical scope of the present disclosure is not limited to thereto.

"Parts" represents parts by mass and "percent" represents percent by mass unless otherwise specified in the following description.

Examples 1-1 to 1-4

A thermoplastic resin, specifically Mitsubishi Chemical Corporation's PC/ABS resin (product number MB8700), was prepared.

For the CF, a material available from carbon Fiber Recycle Industry co., ltd. was used, featuring a fiber length of 3 mm and a fiber breadth (diameter) of 5 $\mu$m.

Using a twin-screw kneading extruder as the kneading machine, the feeder was set to achieve the total mass percentage of the CF and thermoplastic resin of 100 percent by mass, and match the mass ratio of CF to thermoplastic resin (CF/thermoplastic resin) with the ratios shown in Table 1.

The kneading temperature of the twin-screw kneading extruder was adjusted to 230 degrees Celsius to 240 degrees Celsius, and the required amount of CF was added via the feeder during the kneading process.

In this example, the screw rotation speed of the twin-screw kneading extruder was set to 250 rpm to 300 rpm.

The length of the CF after kneading was observed under a microscope, and the results are shown in Table 1.

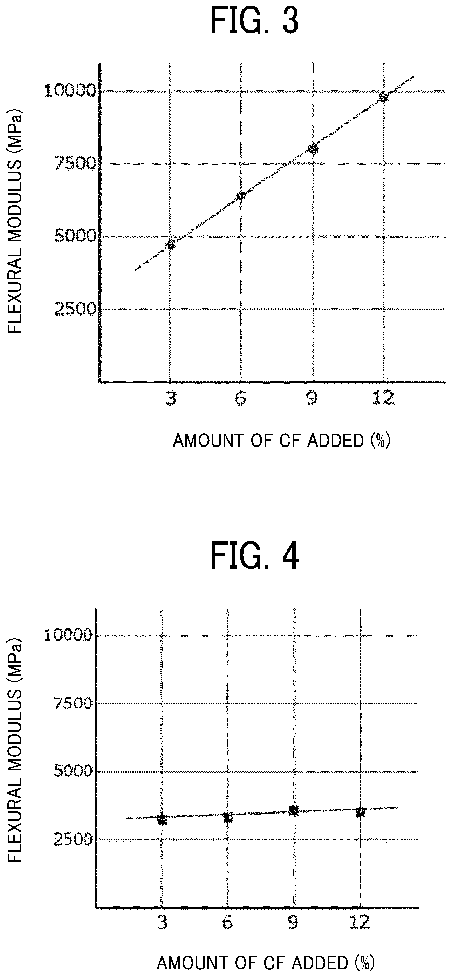

Using the carbon fiber-containing thermoplastic resin composition obtained after kneading, test samples for measuring the flexural modulus were prepared, and the flexural modulus was measured. The results are shown in Table 1 and FIG. 3.

Measurement of Flexural Modulus

The measurement of flexural modulus was conducted in accordance with JIS K7171 (Plastics-Determination of flexural properties).

Test samples were prepared by molding the resin composition into dimensions of 80 × 10 × 4 mm.

Table 1

| | | Example 1-1 | Example 1-2 | Example 1-3 | Example 1-4 |
|---|---|---|---|---|---|
| Resin composition | Thermoplastic resin (percent by mass) | 97 | 94 | 91 | 88 |
| | CF (percent by mass) | 3 | 6 | 9 | 12 |
| Numbers of screw rotation | | 250-300 | 250-300 | 250-300 | 250-300 |
| CF length (before kneading) | | 3 mm | 3 mm | 3 mm | 3 mm |
| CF length (after kneading) | | About 200 $\mu$m | About 200 $\mu$m | About 200 $\mu$m | About 200 $\mu$m |
| Flexural strength (Mpa) | | 4800 | 6500 | 7900 | 9800 |

As seen in the results above, it was confirmed that CF fibers became shorter due to kneading.

As the CF content increased from 3 percent, to 6 percent, 9 percent, and 12 percent, the value of the flexural modulus (MPa) increased linearly.

These results indicate that the flexural modulus (MPa) tends to increase proportionally with the amount of CF added.

However, when more than 12 percent CF was added, CFs tangled each other. This finding indicates that the CF content should be limited to 12 percent in this example. Furthermore, it was found that a CF content of 9 percent was preferable.

Additionally, in the case where the fiber diameter was set to 1 $\mu$m to 10 $\mu$m, the same trend was observed as in Examples 1-1 to 1-4 above.

Examples 2-1 to 2-4

A thermoplastic resin, specifically Mitsubishi Chemical Corporation's PC/ABS resin (product number MB8700), was prepared.

For CF, a material available from Sobueclay kabushiki kaisha with a fiber length of 25 $\mu$m to 50 $\mu$m and a fiber diameter of 5 $\mu$m was used.

Using a twin-screw kneading extruder as the kneading machine, the feeder was set to achieve the total mass percentage of the CF and thermoplastic resin of 100 percent by mass, and match the mass ratio of CF to thermoplastic resin (CF/thermoplastic resin) with the ratios shown in Table 2.

The kneading temperature of the twin-screw kneading extruder was adjusted to 230 degrees Celsius to 240 degrees Celsius, and the required amount of CF was added via the feeder during the kneading process.

In these Examples, the screw rotation speed of the twin-screw kneading extruder was set to 250 rpm to 300 rpm.

The length of the CF after kneading was observed under a microscope, and the results are shown in Table 2.

Judging from these results, the CF fibers became shorter due to kneading.

Using the carbon fiber-containing thermoplastic resin composition obtained after kneading, test samples for measuring the flexural modulus were prepared, and the flexural modulus was measured. The results are shown in Table 2 and FIG. 4.

Table 2

| | | Example 2-1 | Example 2-2 | Example 2-3 | Example 2-4 |
|---|---|---|---|---|---|
| Resin composition | Thermoplastic resin (percent by mass) | 97 | 94 | 91 | 88 |
| | CF (percent by mass) | 3 | 6 | 9 | 12 |
| Numbers of screw rotation | | 250 to 300 | 250 to 300 | 250 to 300 | 250 to 300 |

(continued)

|  | Example 2-1 | Example 2-2 | Example 2-3 | Example 2-4 |
|---|---|---|---|---|
| CF length (before kneading) | 25 $\mu$m to 50 $\mu$m | 25 $\mu$m to 50 $\mu$m | 25 $\mu$m to 50 $\mu$m | 25 $\mu$m to 50 $\mu$m |
| CF length (after kneading) | 25 $\mu$m | 25 $\mu$m | 25 $\mu$m | 25 $\mu$m |
| Flexural strength (Mpa) | 3100 | 3300 | 3600 | 3500 |

As seen in the results above, as the CF content increased from 3 percent, to 6 percent, 9 percent, and 12 percent, the value of the flexural modulus (MPa) increased linearly.

These results indicate that the flexural modulus (MPa) tends to increase proportionally with the amount of CF added.

However, when more than 12 percent CF was added, CFs tangled each other. This finding indicates that the CF content should be limited to 12 percent in this example. Furthermore, it was found that a CF content of 9 percent was preferable.

Additionally, in the case where the fiber diameter was set to 1 $\mu$m to 10 $\mu$m, the same trend was observed as in Examples 1-1 to 1-4 above.

The test results of Examples 1-1 to 1-4 and Examples 2-1 to 2-4 respectively showed that the flexural modulus improves linearly with the fiber content ratio. These results indicate that, for this type of material, the flexural modulus can be adjusted to some extent based on fiber length.

Moreover, it was found that if CF content was constant, increasing the fiber length improved the flexural modulus.

In these Examples, Mitsubishi Chemical Corporation's PC/ABS resin (product number MB8700) was used as the thermoplastic resin, and its flexural modulus when it is used alone was 3000 MPa.

Based on this value as a reference, to achieve an improvement in flexural modulus, adding CF at a level that provides a flexural modulus of at least 4000 MPa was deemed effective.

Examples 3-1 to 3-4

A thermoplastic resin, specifically Mitsubishi Chemical Corporation's PC/ABS resin (product number MB8700), was prepared.

For the CF, a material available from carbon Fiber Recycle Industry co., ltd. was used, featuring a fiber length of 3 mm and a fiber breadth (diameter) of 5 $\mu$m.

Using a twin-screw kneading extruder as the kneading machine, the feeder was set to achieve the total mass percentage of the CF and thermoplastic resin of 100 percent, and match the mass ratio of CF to thermoplastic resin (CF/thermoplastic resin) with the ratios shown in Table 3.

The twin-screw kneading extruder was operated at a kneading temperature adjusted to 230 degrees Celsius to 240 degrees Celsius, and the required amount of CF was added via the feeder during the kneading process.

In these Examples, the number of screw rotation speed was set to 300 rpm to 350 rpm.

Upon observing the CF under a microscope after kneading, it was found that, while the CF length was 3 mm before kneading, the average length after kneading was approximately 50 $\mu$m to 150 $\mu$m.

These results indicate that by adjusting the screw rotation speed (rpm), the length of CF during the kneading process can be controlled.

Using the carbon fiber-containing thermoplastic resin obtained after kneading, test samples for measuring the flexural modulus were prepared, and the flexural modulus was measured. The results are shown in Table 3.

Table 3

| | | Example 3-1 | Example 3-2 | Example 3-3 | Example 3-4 |
|---|---|---|---|---|---|
| Composition of resin composition | Thermoplastic resin (percent by mass) | 97 | 94 | 91 | 88 |
| | CF (percent by mass) | 3 | 6 | 9 | 12 |
| Numbers of screw rotation (rpm) | | 250 to 300 | 250 to 300 | 250 to 300 | 250 to 300 |
| CF length (before kneading) | | 3 mm | 25 $\mu$m to 50 $\mu$m | 25 $\mu$m to 50 $\mu$m | 25 $\mu$m to 50 $\mu$m |

(continued)

| | Example 3-1 | Example 3-2 | Example 3-3 | Example 3-4 |
|---|---|---|---|---|
| CF length (after kneading) | 50 to 150 μm | 25 μm | 25 μm | 25 μm |
| Flexural strength (Mpa) | 4100 | 3100 | 3300 | 3600 |

In Examples 3-1 to 3-4, increasing the CF content from 3 percent, to 6 percent, 9 percent, and 12 percent resulted in a linear improvement in the flexural modulus (MPa).

These results indicate that the flexural modulus (MPa) tends to increase proportionally with the amount of CF added.

However, if more than 12 percent CF was added, CFs tangled each other. This finding indicates that the CF content should be limited to 12 percent in this example. Furthermore, it was found that a CF content of 9 percent was preferable.

Additionally, if the fiber diameter was set to 1 μm to 10 μm, similar trends were observed as in Examples 1-1 to 1-4.

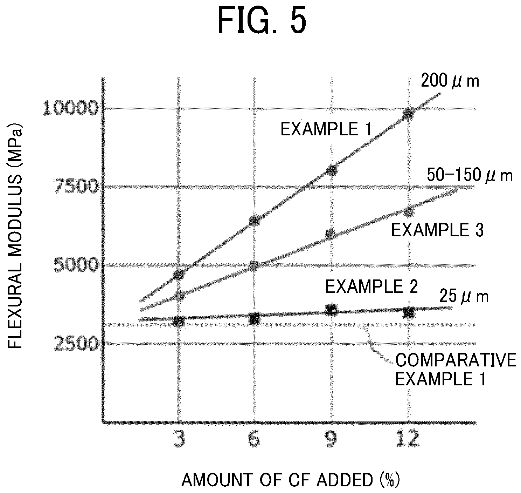

The relationship between CF content and flexural strength in Examples 1 (Examples 1-1 to 1-4), 2 (Examples 2-1 to 2-4), and 3 (Examples 3-1 to 3-4) is shown in Table 4 below and FIG. 5.

A flexural modulus of at least 4000 MPa was rated as A (acceptable).

For comparison, in FIG. 5, the flexural modulus of PC/ABS (MB8700 virgin material) alone is illustrated as a Comparative Example. The flexural modulus of PC/ABS (MB8700 virgin material) was 3000 Mpa. Flexural strength of at least 4000 Mpa was deemed high strength.

A flexural modulus of at least 4000 MPa was rated as A (acceptable).

Molding Shrinkage Rate

Additionally, the molding shrinkage rate was evaluated for samples from Example 1-2, Example 2-2, and Example 3-2, where the CF content was 6 percent. The results are shown in Table 4.

The method of measuring the molding shrinkage rate of thermoplastic resin with added CF is as follows.

The test method was based on ASTM D955 (Standard Test Method for Shrinkage from Mold Dimensions of Thermoplastics).

For example, the molding shrinkage rate in the flow direction is calculated according to the following formula 1.

$$\text{SFlow} = 100 \text{ times } (\text{LM} - \text{LS}) / \text{LM} \quad \text{Formula 1}$$

In Relation 1, LM and LS are as follows.

LM: Length of the mold cavity section
LS: Corresponding length of the cooled test piece

The extent of shrinkage of the molded object after cooling was measured based on the length of the mold.

The mold size was not specifically limited. A size of 200 mm × 70 mm (t = 1.6) was used.

Using thermoplastic resin with added CF, molded objects were created via injection molding.

The dimensions of the resin injected into the mold were measured in the MD (Machine Direction, flow direction) and TD (Traverse Direction, perpendicular to the flow direction).

The comparison of molding shrinkage rates was made against those of procurable filler-containing resins.

These resins typically contain inorganic materials such as talc, mica, or glass filler added to thermoplastic resin to enhance strength properties such as flexural modulus.

As a comparison, filler-containing resin material (product number: DN-7730M) available from TEIJIN LIMITED was used to compare with the carbon fiber-containing resin composition of the present disclosure.

The molding shrinkage rate was measured in accordance with ASTM D955 (Standard Test Method for Shrinkage from Mold Dimensions of Thermoplastics).

The molding shrinkage rates of the filler-containing resin material (product number: DN-7730M) available from Teijin Limited were as follows:

MD: 0.2 percent
TD: 0.3 percent

## EP 4 592 334 A1

On the other hand, the molding shrinkage rate of thermoplastic resin with added CF was measured in the same manner. The following results were obtained, indicating that the molded object had minimal dimensional errors and was of good quality:

MD: 0.2 percent
TD: 0.3 percent

The molding shrinkage rate measurement results for Example 1-2, Example 2-2, and Example 3-2, where the CF content was 6 percent, are shown below.

Table 4

| | | Example 1-2 | Example 2-2 | Example 3-2 |
|---|---|---|---|---|
| Length of CF | Before kneading | About 3 mm | About 25 to 50 $\mu$m | About 3 mm |
| | After kneading | About 200 $\mu$m | About 25 $\mu$m | About 50 to 150 $\mu$m |
| Evaluation on properties of resin composition containing carbon fiber | Flexural modulus at 6 percent CF added | 6500 Mpa | 3300 Mpa | 5000 Mpa |
| | Evaluation | A | C | A |
| | Molding shrinkage rate MD (flow direction) | 0.40 percent | 0.20 percent | 0.20 percent |
| | Evaluation | C | A | A |
| | Molding shrinkage rate TD (direction perpendicular to flow direction) | 0.10 percent | 0.30 percent | 0.30 percent |
| | Evaluation | C | A | A |

For the flexural modulus, values of at least 4000 MPa were rated as A (acceptable).

Regarding the molding shrinkage rate, cases where MD was 0.2 percent and TD was 0.3 percent were rated as A (acceptable).

This is also advantageous for standardizing molds during injection molding.

On the other hand, when there is a significant difference between the molding shrinkage rate MD (flow direction) and TD (direction perpendicular to flow), anisotropy arises due to factors such as the alignment of carbon fibers.

In such cases, the dimensions in the X and Y directions of the molded product produced via injection molding differ, which was rated as C (unacceptable).

From the perspective of flexural modulus, molding shrinkage rate in the MD (flow direction), and molding shrinkage rate in the TD (direction perpendicular to flow) of the sample to which 6 percent CF was added, Example 3-2 received all A (acceptable) grade. This sample is thus preferable as it improves strength properties such as flexural modulus and mitigates the difference in molding shrinkage rates between the resin flow direction (Y) and the direction (X) perpendicular to the flow.

As an effect of the average fiber length, if the length is shorter than 50 $\mu$m, the strength properties such as flexural strength do not improve. Conversely, if the length exceeds 150 $\mu$m, anisotropy arises, leading to issues with the molding shrinkage rate and failure to achieve the required dimensions of the molded product.

Regarding the effects of carbon fiber content, if the content is less than 3 percent, the strength properties such as flexural strength do not improve. Conversely, if the content exceeds 9 percent, anisotropy arises, causing issues with the molding shrinkage rate and failure to achieve the required dimensions of the molded product, along with problems such as entanglement and aggregation of carbon fibers.

The aspects of the present disclosure are, for example, as follows:

The aspects of the present disclosure are, for example, as follows:

Aspect 1

A resin composition contains carbon fiber contains a thermoplastic resin and a carbon fiber kneaded in thermoplastic resin, wherein the carbon fiber has an average length of 50 to 150 $\mu$m, the proportion of the carbon fiber to the thermoplastic resin is 3 to 9 percent by mass, and the resin composition containing carbon fiber has a flexural strength of at least 4000 Mpa.

Effect

Because the carbon fiber-containing resin composition has the aforementioned configuration, it enhances strength properties without causing anisotropy in the molding shrinkage rate.

Additionally, with an average fiber length between 50 $\mu$m and 150 $\mu$m, the molded product achieves sufficient flexural strength, avoids anisotropy, and maintains dimensional accuracy by preventing issues related to molding shrinkage.

Aspect 2

The resin composition contains carbon fiber according to Aspect 1 mentioned above, wherein the carbon fiber has a breadth of 1 to 10 $\mu$m.

Effect

With a carbon fiber thickness ranging from 1 $\mu$m to 10 $\mu$m, sufficient strength is achieved, and variability in quality during the kneading process is prevented.

Aspect 3

The resin composition containing carbon fiber according to Aspect 1 or 2 mentioned above, wherein the thermoplastic resin contains A, B, or A + B, where A represents polycarbonate resin and B represents a resin mixture of polycarbonate resin and acrylonitrile-butadiene-styrene copolymer resin.

Effect

Because the thermoplastic resin is the aforementioned material, the resin composition can maintain high strength properties and flame retardancy.

Aspect 4

The resin composition containing carbon fiber according to any one of Aspects 1 to 3 mentioned above, wherein the carbon fiber contains a recycled material.

Effect

The recovery material loading rate can be improved.

Aspect 5

The resin composition containing carbon fiber according to any one of Aspects 1 to 4 mentioned above, wherein the carbon fiber contains a recycled material.

Effect

The recovery material loading rate can be improved.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

**Claims**

1. A resin composition containing carbon fiber comprising:

a thermoplastic resin; and
a carbon fiber kneaded in thermoplastic resin,
wherein the carbon fiber has an average length of 50 to 150 μm,
a proportion of the carbon fiber to the thermoplastic resin is 3 to 9 percent by mass, and
the resin composition containing carbon fiber has a flexural strength of at least 4000 Mpa.

2. The resin composition containing carbon fiber according to claim 1, wherein the carbon fiber has a breadth of 1 to 10 μm.

3. The resin composition containing carbon fiber according to claim 1 or 2, wherein the thermoplastic resin comprises A, B, or A + B, where A represents a polycarbonate resin and B represents a resin mixture of polycarbonate resin and acrylonitrile-butadiene-styrene copolymer resin.

4. The resin composition containing carbon fiber according to claim 1, 2 or 3, wherein the carbon fiber comprises a recycled material.

5. The resin composition containing carbon fiber according to any one of claims 1 to 4, wherein the thermoplastic resin comprises a recycled material.

# FIG. 1
## BACKGROUND ART

LENGTH
200 $\mu$m

BREADTH $\phi$
5 $\mu$m

ASPECT RATIO
(FIBER LENGTH/FIBER BREADTH) =40

# FIG. 2
## BACKGROUND ART

TEST
PIECE

y1
y2
x1

Y DIRECTION

x2

FLOW

x3

DIRECTION OF FIBER,
FIBER LENGTH

X DIRECTION

# FIG. 3

# FIG. 4

# FIG. 5

Europäisches
Patentamt

European
Patent Office

Office européen
des brevets

# EUROPEAN SEARCH REPORT

Application Number

EP 25 15 0922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/023937 A1 (PATEL NIRAJKUMAR [US]) 27 September 2001 (2001-09-27) * paragraphs [0027] - [0028]; claims 1, 2, 6, 13-17; examples 2, 4; table 4A * | 1-5 | INV. C08J3/20 C08J3/22 C08K3/04 C08K7/06 C08L69/00 |
| A | JP H10 237316 A (MITSUBISHI ENG PLAST KK) 8 September 1998 (1998-09-08) * claims 1, 2, 5; examples 1, 4; table 1 * | 1-5 | |
| A | JP 2023 070900 A (MITSUBISHI ENG PLASTICS CORP; SHINRYO CORP) 22 May 2023 (2023-05-22) * claims 1-8; example 5; table 3 * | 1-5 | |
| A | JP 2018 154795 A (MITSUI CHEMICALS INC) 4 October 2018 (2018-10-04) * claim 1; examples 1-3, 1-5; table 1 * | 1-5 | |
| A | EP 4 151 667 A1 (MITSUBISHI ENG PLASTICS CORP [JP]; SHINRYO CORP [JP]) 22 March 2023 (2023-03-22) * claims 1, 3, 10; tables 1-5 * | 1-5 | |
| A | GUPTA ANKIT ET AL: "Processing, mechanical characterization, and micrography of 3D-printed short carbon fiber reinforced polycarbonate polymer matrix composite material", THE INTERNATIONAL JOURNAL OF ADVANCED MANUFACTURING TECHNOLOGY, SPRINGER, LONDON, vol. 107, no. 7-8, 1 April 2020 (2020-04-01), pages 3185-3205, XP037110673, ISSN: 0268-3768, DOI: 10.1007/S00170-020-05195-Z [retrieved on 2020-04-11] * the whole document * | 1-5 | |

### TECHNICAL FIELDS SEARCHED (IPC)

C08J
C08K
C09J
C08L

The present search report has been drawn up for all claims

| Place of search | Date of completion of the search | Examiner |
|---|---|---|
| Munich | 15 May 2025 | Fischer, Viktor |

EPO FORM 1503 03.82 (P04C01)

**EP 4 592 334 A1**

**ANNEX TO THE EUROPEAN SEARCH REPORT
ON EUROPEAN PATENT APPLICATION NO.**

EP 25 15 0922

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2025

| Patent document cited in search report | | Publication date | Patent family member(s) | | Publication date |
|---|---|---|---|---|---|
| US 2001023937 | A1 | 27-09-2001 | AU | 3633801 A | 14-08-2001 |
| | | | EP | 1268651 A1 | 02-01-2003 |
| | | | MY | 117701 A | 31-07-2004 |
| | | | TW | I222987 B | 01-11-2004 |
| | | | US | 6231788 B1 | 15-05-2001 |
| | | | US | 2001023937 A1 | 27-09-2001 |
| | | | WO | 0157128 A1 | 09-08-2001 |
| JP H10237316 | A | 08-09-1998 | NONE | | |
| JP 2023070900 | A | 22-05-2023 | NONE | | |
| JP 2018154795 | A | 04-10-2018 | NONE | | |
| EP 4151667 | A1 | 22-03-2023 | CN | 115380080 A | 22-11-2022 |
| | | | EP | 4151667 A1 | 22-03-2023 |
| | | | JP | 7051021 B1 | 08-04-2022 |
| | | | JP | WO2021230132 A1 | 18-11-2021 |
| | | | US | 2023145210 A1 | 11-05-2023 |
| | | | WO | 2021230132 A1 | 18-11-2021 |

EPO FORM P0459

For more details about this annex : see Official Journal of the European Patent Office, No. 12/82

17

**EP 4 592 334 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000119405 A